# EUROPEAN PATENT APPLICATION

(11) **EP 1 198 019 A2**
(43) Date of publication of application: **17.04.2002**
(21) Application number: 01123899.5
(22) Date of filing: 05.10.2001
(51) Int. Cl.: H01M 4/58, H01M 10/40

(54) **Cathode active material for non aqueous lithium secondary battery and methods for preparation thereof**

(30) Priority: 06.10.2000 JP 2000308299
(71) Applicant: SONY CORPORATION, Tokyo (JP)
(72) Inventor: Sato, Atsushi, Shinagawa-ku, Tokyo (JP); Kuyama, Junji, Shinagawa-ku, Tokyo (JP); Fukushima, Yuzuru, Shinagawa-ku, Tokyo (JP); Hosoya, Mamoru, Shinagawa-ku, Tokyo (JP)
(74) Representative: Müller . Hoffmann & Partner Patentanwälte

(57) **Abstract**

A non-aqueous electrolyte cell in which the allowable range of starting materials for synthesis left in a cathode active material is prescribed in order to realize satisfactory cell characteristics. The non-aqueous electrolyte cell includes a cathode containing a cathode active material, an anode containing an anode active material, and a non-aqueous electrolyte, in which the cathode active material is mainly composed of a compound represented by the general formula LiₓFePO₄, where 0 < x ≤ 1, with the molar ratio of Li₃PO₄ to a compound represented by the general formula LiₓFePO₄ to the compound represented by the general formula LiₓFePO₄, which ratio is represented by Li₃PO₄/LiFePO₄, being Li₃PO₄/LiₓFePO₄ ≤ 6.67 × 10⁻².

## Description

### BACKGROUND OF THE INVENTION

### Field of the Invention

This invention relates to a cathode active material capable of doping/dedoping lithium reversibly, a non-aqueous electrolyte cell containing the cathode active material, and to the methods for the preparation of the cathode active material and the non-aqueous electrolyte cell.

### Description of Related Art

Recently, with drastic progress in the art of electronic equipment, investigations into a rechargeable secondary cell, as a power source that may be used conveniently and economically for a prolonged period of time, are proceeding briskly. Among typical secondary cells, there are a lead storage cell, an alkali storage cell and a non-aqueous electrolyte secondary cell.

Among the aforementioned secondary cell, a lithium ion secondary cell, as a non-aqueous electrolyte secondary cell, has advantages such as high output or high energy density.

A lithium ion secondary cell is made up of at least a cathode and an anode, each having an active material capable of reversibly doping/dedoping lithium ions, and a non-aqueous electrolyte. The charging reaction of the lithium ion secondary cell proceeds as lithium ions are deintercalated into an electrolyte solution at the cathode and are intercalated at the anode into the anode active material. In discharging, reaction opposite to the charging reaction proceeds, such that lithium ions are intercalated at the cathode. That is, charging/discharging is repeated as the reaction of entrance/exiting of lithium ions from the cathode into the anode active material and from the anode active material occurs repeatedly.

As the cathode active material of the lithium ion secondary cell, LiCoO₂, Li NiO₂ or LiMn₂O₄ is used because these materials have a high energy density and a high voltage.

However, these cathode active materials, containing metal elements of low Clark number in their composition, suffer from high cost and difficulties caused by supply instability. Moreover, these cathode active materials are higher in toxicity and liable to pollute the environment significantly. So, there is raised a demand for a novel substitute material usable as a cathode active material.

Proposals have been made for use of a compound represented by the general formula LiₓFePO₄, where 0 < x ≤ 1, having an olivinic structure, as a cathode active material for a lithium ion secondary cell. LiFeₓPO₄ has a volumetric density as high as 3.6 g/m³ and generates a high potential of 3.4V, while having a theoretical capacity as high as 170 mAh/g. Additionally, LiFePO₄ contains an electrochemically dedopable Li at a rate of one atom per Fe atom, in its initial state, and hence is a promising candidate for a cathode active material for a lithium ion secondary cell. Moreover, LiFePO₄ includes iron, as an inexpensive material plentiful in supply, in its composition, and hence is less costly than any of the aforementioned materials, that is LiCoO₂, LiNiO₂ or LiMn₂O₄. Moreover, it is low in toxicity and is less liable to pollute the environment.

As a method for the preparation of a compound of an olivinic structure represented by the general formula LiₓFePO₄, such a method has been proposed which consists in mixing lithium phosphate (Li₃PO₄) and ferrous phosphate (Fe₃(PO₄)₂ or hydrates of Fe₃(PO₄)₂ represented by Fe₃(PO₄)₂·nH₂O, where n denotes the number of hydrates, as starting materials for synthesis, and sintering the resulting mixture at a preset temperature.

In case of reacting Li₃PO₄ with Fe₃(PO₄)₂, the synthesis reaction of LiFePO₄ at the time of firing is represented by the following formula(1):

Li₃PO₄ + (Fe₃(PO₄)₂ → 3LiFePO₄ (1).

As may be seen from the above reaction formula, Li₃PO₄ and Fe₃(PO₄)₂ are reacted with each other at an element ratio of Li to Fe equal to 1:1. If the composition of the starting materials for synthesis is represented by the Li to Fe elementary molar ratio, represented by Li/Fe, and Li/Fe = 1/1 the starting materials for synthesis is utilized in their entirety for the synthesis reaction.

However, the portion of the starting materials for synthesis exceeding the stoichiometric amounts of the reaction formula (1) is not used for the synthesis reaction, but is left as impurity in the cathode active material. If this portion of the starting materials for synthesis left in the cathode active material is excessive, the non-aqueous electrolyte cell employing the cathode active material is deteriorated in cell performance.

### SUMMARY OF THE INVENTION

It is therefore an object of the present invention to provide a cathode active material and anon-aqueous electrolyte cell in which the allowable limit for the starting materials for synthesis not exploited for the synthesis reaction of LiₓFePO₄ but left over in the cathode active material is prescribed for realizing an optimum cell performance, and methods for the preparation of such cathode active material and the non-aqueous electrolyte cell.

In one aspect, the present invention provides a cathode active material mainly composed of a compound represented by a general formula LiₓFePO₄, where 0 < x ≤ 1, wherein a molar ratio of Li₃PO₄ to the compound represented by the general formula LiₓFePO_{4,} which ratio represented by Li₃PO₄/LiFePO_{4,} is Li₃PO₄/LiFePO₄ ≤ 6.67 × 10⁻².

In the cathode active material according to the present invention, composed mainly of LiₓFePO₄, Li₃PO₄, not used in the synthesis reaction, is occasionally left. However, this Li₃PO₄ imperils the cell characteristics. Thus, the non-aqueous electrolyte cell can be of high capacity by setting the ratio Li₃PO₄/LiₓFePO₄ in the cathode active material as described above to optimize the amount of Li₃PO₄ left in the cathode active material.

In still another aspect, the present invention provides a non-aqueous electrolyte cell having a cathode containing a cathode active material, an anode containing an anode active material and a non-aqueous electrolyte, wherein said cathode active material is mainly composed of a compound represented by a general formula LiₓFePO₄, where 0<x≤1, and wherein a molar ratio of Li₃PO₄ to the compound represented by the general formula LiₓFePO_{4.} which ratio is represented by Li₃PO₄/LiFePO_{4,} is Li₃PO₄/LiFePO₄ ≤ 6.67 × 10⁻².

In the non-aqueous electrolyte cell according to the present invention, a cathode active material mainly composed of LiₓFePO₄ is used. In this cathode active material,Li₃PO₄ is occasionally left without being utilized in the synthesis reaction. However, this Li₃PO₄ imperils the cell characteristics. Thus, the high capacity nonaqueous electrolyte cell produced can be of high capacity by setting the ratio Li₃PO₄/LiFeₓPO₄ in the cathode active material as described above to optimize the amount of Li₃PO₄ left in the cathode active material.

In still another aspect, the present invention provides a method for preparing a cathode active material comprising a mixing step of mixing Li₃PO₄ and Fe₃(PO₄)₂ or hydrates of the Fe₃(PO₄)₂ represented by Fe₃(PO₄)₂·nH₂O, where n denotes a number of hydrates, as starting materials for synthesis, so as to form a mixture and sintering step of sintering the mixture obtained in said mixing step, wherein a mixing ratio of said starting materials for synthesis in terms of an element molar ratio of Li to Fe represented by Li/Fe is 1/1.05 ≤ Li/Fe ≤ 1.2/1.

In the method for the preparation of the cathode active material, according to the present invention, a cathode active material mainly composed of LiFeₓPO₄ can be produced. In this cathode active material,Li₃PO₄ is occasionally left without being utilized in the synthesis reaction. However, this Li₃PO₄ imperils the cell characteristics. Thus, by setting the ratio Li₃PO₄/LiFeₓPO₄ in the cathode active material as described above, to optimize the amount of residual Li₃PO₄, such a cathode active material can be produced which enables a non-aqueous electrolyte cell of high capacity to be produced.

In yet another aspect, the present invention provides a method for the preparing a non-aqueous electrolyte cell having a cathode containing a cathode active material, an anode containing an anode active material and a non-aqueous electrolyte, comprising mixing step of, when preparing said cathode active material, mixing Li₃PO₄ and Fe₃(PO₄)₂ or hydrates of Fe₃(PO₄)₂ represented by Fe₃(PO₄)₂·nH₂O, where n denotes a number of hydrates, as starting materials for synthesis so as to form a mixture and sintering step of sintering the mixture obtained in said mixing step, wherein a mixing ratio of said starting materials for synthesis in terms of an element molar ratio of Li to Fe represented by Li/Fe is 1/1.05 ≤ Li/Fe ≤ 1.2/1.

In the method for the preparation of the non-aqueous electrolyte cell, according to the present invention, a cathode active material mainly composed of LiFeₓPO₄ can be produced.. In this cathode active material, Li₃PO₄ is occasionally left without being utilized in the synthesis reaction. Since this Li₃PO₄ imperils the cell characteristics, the ratio Li₃PO₄/LiFeₓPO₄ in the cathode active material is set as described above to optimize the amount of residual Li₃PO₄ to provide the cathode active material which enables a high capacity non-aqueous electrolyte cell to be produced.

In the cathode active material according to the present invention, mainly composed of a compound represented by the general formula LiₓFePO₄, where 0 < x ≤ 1, a molar ratio of a compound represented by the general formula Li₃PO₄ to the compound represented by the general formula LiₓFePO₄, or Li₃PO₄/LiFePO₄, is such that Li₃PO₄/LiFePO₄ ≤ 6.67 × 10⁻². So, the amount of residual Li₃PO₄ in the cathode active material is in an optimum range, and hence the cathode active material allows to realize a high capacity non-aqueous electrolyte cell. On the other hand, the non-aqueous electrolyte cell employing this cathode active material is of a high capacity and superior in cell characteristics.

In the method for the preparation of a cathode active material according to the present invention, Li₃PO₄ and Fe₃(PO₄)₂ or hydrates Fe₃(PO₄)₂·nH₂O thereof, where n is the number of hydrates, as starting materials for synthesis, are mixed to form a mixture, which then is sintered. The mixing ratio of the starting materials for synthesis in terms of an element molar ratio of Li to Fe, or Li/Fe, is set so that 1/1.05 ≤ Li/Fe ≤ 1.2/1. So, with the method for the preparation of a non-aqueous electrolyte cell with the use of the cathode active material, such a non-aqueous electrolyte cell which is of high capacity and which is superior in cell characteristics may be produced.

### BRIEF DESCRIPTION OF THE DRAWINGS

Fig. 1 is a longitudinal cross-sectional view showing an illustrative structure of a non-aqueous electrolyte cell according to the present invention.
Fig.2 is an X-ray diffraction pattern diagram for cathode active materials of samples 1 to 6.
Fig.3 is an X-ray diffraction pattern diagram for cathode active materials of samples 7 to 12.

### DESCRIPTION OF THE PREFERRED EMBODIMENTS

Referring to the drawings, preferred embodiments of the present invention will be explained in detail.

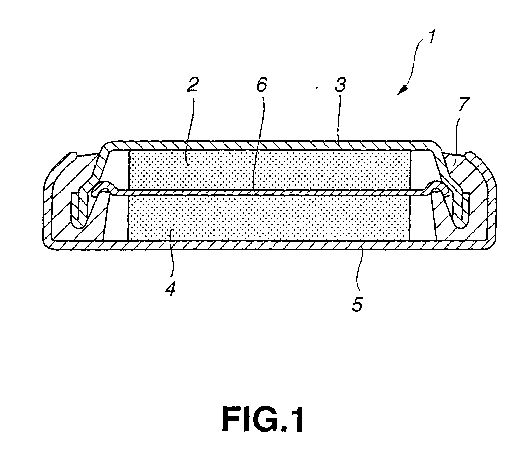

Referring to Fig. 1, a non-aqueous electrolyte cell 1, prepared in accordance with the present invention, includes an anode 2, an anode can 3 for holding the anode 2, a cathode 4, a cathode can 5 for holding the cathode 4, a separator 6 interposed between the cathode 4 and the anode 2, and an insulating gasket 7. In the anode can 3 and in the cathode can 5 is charged a non-aqueous electrolytic solution.

The anode 2 is formed by e.g., a foil of metal lithium as an anode active material. If a material capable of doping/dedoping lithium is used as the anode active material, the anode 2 is a layer of an anode active material formed on an anode current collector, which may, for example, be a nickel foil.

As the anode active material, capable of doping/dedoping lithium, metal lithium, lithium alloys, lithium-doped electrically conductive high molecular materials or layered compounds, such as carbon materials or metal oxides, may be used.

The binder contained in the layer of the anode active material may be any suitable known resin material, routinely used as the binder of the layer of the anode active material for this sort of the non-aqueous electrolyte cell.

The anode can 3 holds the anode 2, and serves as an external anode of the non-aqueous electrolyte cell 1.

The cathode 4 is a layer of the cathode active material, formed on a cathode current collector, such as an aluminum foil. The cathode active material, contained in the cathode 4, is able to reversibly emit or occlude lithium electro-chemically.

As the cathode active material, a composite material of carbon and a compound of an olivinic structure represented by the general formula LiₓFePO₄, where 0 < x ≤ 1.0, is used.

In synthesizing LiₓFePO₄ as the cathode active material, Li₃PO₄, Fe₃(PO₄)₂ or its hydrates Fe₃(PO₄)₂·nH₂O, where n stands for the number of hydrates, is used as the starting material for the synthesis.

This LiₓFePO₄ is synthesized by mixing the starting materials for synthesis and subsequently firing the resulting mixture. The detailed manufacturing method will be explained later. In case of reacting Li₃PO₄ with Fe₃(PO₄)₂, the synthesis reaction for LiFePO₄ at the time of sintering is shown by the reaction formula (2)

Li₃PO₄ + Fe₃(PO₄)₂ → 3LiFePO₄ (2).

As may be seen from the above reaction formula (2), Li₃PO₄ and Fe₃(PO₄)₂ are reacted with each other at an elementary ratio of Li to Fe equal to 1:1. However, since the starting materials for synthesis in excess of the theoretical value of the reaction formula (2) is not used for the synthesis reaction, such excess portion is left over as impurity in the cathode active material. If the amount of the starting materials for synthesis left over in the cathode active material is excessive, the performance of the non-aqueous electrolyte cell 1 is lowered.

So, according to the present invention, the molar ratio of Li₃PO₄ to the compound LiₓFePO₄, which ratio represented by Li₃PO₄/LiₓFePO_{4.} is set to be Li₃PO₄/LiₓFePO₄ ≤ 6.67 × 10⁻².

In the cathode active material, synthesized from Li₃PO₄ and Fe₃(PO₄)₂, is mainly composed of LiₓFePO₄. As described above, Li₃PO₄, not used for the synthesis reaction, may be left over in the cathode active material to imperil the cell characteristics. Therefore, by optimizing the range of the ratio Li₃PO₄/LiₓFePO₄ as defined above, the non-aqueous electrolyte cell 1 can be realized which is of high capacity and superior in cell characteristics.

The binder contained in the layer of the cathode active material may be formed of any suitable known resin material routinely used as the binder for the layer of the cathode active material for this sort of the non-aqueous electrolyte cell.

The cathode can 5 holds the cathode 4, while serving as an external cathode of the non-aqueous electrolyte cell 1.

The separator 6, used for separating the cathode 4 and the anode 2 from each other, may be formed of any suitable known resin material routinely used as a separator for this sort of the non-aqueous electrolyte cell. For example, a film of a high molecular material, such as polypropylene, is used. From the relation between the lithium ion conductivity and the energy density, the separator thickness which is as thin as possible is desirable. Specifically, the separator thickness desirably is 50 µm or less.

The insulating gasket 7 is built in and unified to the anode can 3. The role of this insulating gasket 7 is to prevent leakage of the non-aqueous electrolyte solution charged into the anode can 3 and into the cathode can 5.

As the non-aqueous electrolyte solution, such a solution obtained on dissolving an electrolyte in a non-protonic aqueous solvent is used.

As the non-aqueous solvent, propylene carbonate, ethylene carbonate, butylene carbonate, vinylene carbonate, γ-butyllactone, sulfolane, 1, 2-dimethoxyethane, 1, 2-diethoxyethane, 2-methyl tetrahydrofuran, 3-methyl-1,3-dioxolane, methyl propionate, methyl butyrate, dimethyl carbonate, diethyl carbonate and dipropyl carbonate, for example, may be used. In view of voltage stability, cyclic carbonates, such as propylene carbonate, ethylene carbonate, butylene carbonate or vinylene carbonate, and chained carbonates, such as dimethyl carbonate, diethyl carbonate and dipropyl carbonate, are preferably used. These non-aqueous solvents may be used either alone or in combination.

As the electrolytes dissolved in the non-aqueous solvent, lithium salts, such as LiPF₆, LiClO₄, LiAsF₆, LiBF₄, LiCF₃SO₃ or LiN(CF₃SO₂)₂, may be used. Of these lithium salts, LiPF₆ and LiBF₄ are preferred.

Although the non-aqueous electrolyte cell, explained above, is the non-aqueous electrolyte secondary cell 1 employing a non-aqueous electrolyte solution, the present invention is not limited thereto, but may be applied to such a cell employing a solid electrolyte as the non-aqueous electrolyte. The solid electrolyte used may be an inorganic solid electrolyte or a high molecular solid electrolyte, such as gel electrolyte, provided that the material used exhibits lithium ion conductivity. The inorganic solid electrolyte may be enumerated by lithium nitride and lithium iodide. The high molecular solid electrolyte is comprised of an electrolyte salt and a high molecular compound dissolving it. The high molecular compound may be an ether based high molecular material, such as poly(ethylene oxide), cross-linked or the like, a poly(methacrylate) ester based compound, or an acrylate based high molecular material, either alone or in combination in the state of being copolymerized or mixed in the molecules. In this case, the matrix of the gel electrolyte may be a variety of high molecular materials capable of absorbing and gelating the non-aqueous electrolyte solution. As these high molecular materials, fluorine based high molecular materials, such as, for example, poly(vinylidene fluoride) or poly(vinylidene fluoride- CO-hexafluoropropylene), ether based high molecular materials, such as polyethylene oxide, cross-linked products or the like, or poly(acrylonitrile), may be used. Of these, the fluorine-based high molecular materials are particularly desirable in view of redox stability.

The method for the preparation of the non-aqueous electrolyte cell 1, constructed as described above, is now explained.

First, LiFePO₄ as the cathode active material is manufactured by the following manufacturing method:

In preparing this cathode active material, Li₃PO₄ and Fe₃(PO₄)₂ or hydrates thereof Fe₃(PO₄)₂·nH₂O, where n stands for the number of hydrates, are used as the starting materials for synthesis, and mixed together to give a mixture, by way of a mixing step.

In this mixing step, the mixing ratio of the starting materials for synthesis is set to 1/1.05 ≤ Li/Fe ≤ 1.2/1, and preferably to 1/1.025 ≤ Li/Fe ≤ 1.1/1, in terms of the Li to Fe elementary molar ratio Li/Fe.

The starting materials for synthesis, thus mixed together, are synthesized to give LiFePO₄ in the ensuing sintering step. However, since the portion of the starting materials for synthesis exceeding the stoichiometric amounts is not used for the synthesis reaction, such excess portion is left as impurity in the cathode active material. This portion ofthe starting materials for synthesis, thus left over, imperils the cell characteristics. Thus, by setting the composition of the starting materials for synthesis to the above range, it is possible to prepare a cathode active material in which the proportion of the starting materials for synthesis left over is in an optimum range. By using this cathode active material, the non-aqueous electrolyte cell 1 of high capacity may be produced.

The mixing of the starting materials for synthesis needs to be performed thoroughly. By thoroughly mixing the starting materials for synthesis, the respective starting materials are mixed homogeneously to increase the number of contact points of the starting materials to enable the synthesis reaction in the ensuing sintering step to proceed expeditiously.

The mixture from the mixing step then is sintered in the sintering step.

For sintering, the mixture is sintered in an inert gas atmosphere or in a reducing gas atmosphere, such as hydrogen or carbon monoxide, to yield LiFePO₄ having an olivinic structure.

If Fe₃(PO₄)₂ is used as a starting materials for synthesis, no by-product is yielded, as may be seen from the above reaction formula (2). On the other hand, if Fe₃(PO₄)₂ ·nH₂O is used, water, which is non-toxic, is by-produced. The reaction for the case of using Fe₃(PO₄)₂ ·nH₂O is as shown by the following reaction formula (3):

Li₃PO₄ + Fe₃(PO₄)₂ ·nH₂O → 3 LiFePO₄ + nH₂O (3)

where n denotes the number of hydrates and is equal to 0 for an anhydride.

Thus, with the present manufacturing method, high safety during sintering is achieved. Additionally, as apparent from the above chemical formulas (1) and (2), since only a minor quantity of by-products is produced, the yield of LiFePO₄ can be improved appreciably.

The sintering temperature for the mixture may be 400 to 900°C by the above method for synthesis. However, in consideration of the cell performance, the temperature of 500 to 700°C is desirable. If the sintering temperature is below 400°C, there is a fear that the chemical reaction or crystallization does not proceed sufficiently so that no homogeneous LiFePO₄ cannot be produced. On the other hand, if the sintering temperature exceeds 900°C, there is a risk that crystallization proceeds excessively so that LiFePO₄ grain size is coarse and hence no sufficient discharge capacity can be produced.

The non-aqueous electrolyte cell 1, employing the so prepared LiFePO₄ as a cathode active material, may be prepared e.g., as follows:

For preparing the anode 2, an anode active material and a binder are dispersed in a solvent to prepare a slurried cathode mixture. The so produced cathode mixture is uniformly coated on the current collector and dried to form a layer of an cathode active material to prepare the anode 2. As the binder for the anode mixture, any suitable known binder may be used. Alternatively, the anode mixture may be added to with any suitable additive. Still alternatively, metal lithium, as an anode active material, may directly be used as the anode 2.

For preparing the cathode 4, the cathode active material and the binder are dispersed in a solvent to prepare a slurried cathode mixture. The cathode active material is mainly composed of a compound represented by a general formula LiₓFePO₄, where 0 < x ≤ 1, and the molar ratio of Li₃PO₄ to the compound represented by the general formula LiₓFePO_{4,} which ratio represented by Li₃PO₄/LiFePO₄, is Li₃PO₄/LiFePO₄ ≤ 6.67 × 10⁻². The so produced slurried cathode mixture is uniformly coated on a current collector and dried to form a layer of a cathode active material to complete the cathode 4. As the binder for the cathode mixture, any suitable binder of the known type may be used, or additive agents of the known type may be added to the cathode mixture.

The non-aqueous electrolyte solution may be prepared by dissolving an electrolyte salt in a non-aqueous solvent.

The anode 2 is inserted into the anode can 3, the cathode 4 is inserted into the cathode can 5 and the separator 6 comprised of a polypropylene porous film is arranged between the anode 2 and the cathode 4. A non-aqueous electrolyte solution was charged into the anode can 3 and the cathode can 5. The anode can 3 and the cathode can 5 are caulked and secured together, via insulating gasket 7, placed in-between, to complete a coin-shaped non-aqueous electrolyte cell 1.

There is no particular limitations to the shape of the non-aqueous electrolyte cell 1 embodying the present invention, such that it may be cylindrically-shaped, square-shaped, coin-shaped or button-shaped, while it may be of desired variable sizes, such as of a thin type or of a large format.

### Examples

The present invention is hereinafter explained based on specified experimental results.

### <Sample 1>

### [Preparation of cathode active material]

First, Li₃PO₄ and Fe₃(PO₄)₂·8H₂O were mixed to yield a lithium to iron elementary ratio represented by Li/Fe of 1.000:1.075and acetylene black powders were added in an amount of 10 wt% of the entire sintered product to yield a mixture. This mixture and alumina balls 10 mm in diameter were then charged into an alumina vessel, having a diameter of 100 mm, with the mixture to alumina ball mass ratio of 1:2, and the mixture was milled using a planetary ball mill. As this planetary ball mill, a planetary rotating pot mill for test, manufactured by ITO SEISAKUSHO KK under the trade name of LA-PO₄, was used, and the mixture was milled under the following conditions:

### Conditions for planetary ball milling

radius of rotation about sun gear: 200 mm
number of revolutions about the sun gear: 250 rpm
number of revolutions about a planetary gear itself: 250 rpm
driving time duration: 10 hours.

The milled mixture was charged into a ceramic crucible and sintered for five hours at a temperature of 600°C in an electrical furnace maintained in a nitrogen atmosphere to produce an LiFePO₄ carbon composite material.

### [Preparation of non-aqueous electrolyte cell]

95 parts by weight of the cathode active material, prepared as described above, and 5 parts by weight of poly (vinylidene fluoride), in the form of fluorine resin powders, as a binder, were mixed together and molded under pressure to form a pellet-shaped cathode having a diameter of 15.5 mm and a thickness of 0.1 mm.

A foil of metal lithium was then punched to substantially the same shape as the cathode to form an anode.

Then, a non-aqueous electrolyte solution was prepared by dissolving LiPF₆ in a solvent mixture comprised of equal volumes of propylene carbonate and dimethyl carbonate, at a concentration of 1 mol/l, to prepare a non-aqueous electrolyte solution.

The cathode, thus prepared, was charged into the cathode can, while the anode was held in the anode can and the separator was arranged between the cathode and the anode. The non-aqueous electrolytic solution is injected into the anode can and into the cathode can. The anode can and the cathode can 5 were caulked and secured together to complete a type 2016 coin-shaped non-aqueous electrolyte cell having the diameter of 20.0mm and the thickness of 1.6mm.

### <Sample 2>

A test cell was prepared in the same way as in sample 1 except preparing the cathode active material as the ratio Li/Fe was set in mixing the starting materials for synthesis to 1.000/1.050.

### <Sample 3>

A test cell was prepared in the same way as in sample 1 except preparing the cathode active material as the ratio Li/Fe was set in mixing the starting materials for synthesis to 1.000/1.025.

### <Sample 4>

A test cell was prepared in the same way as in sample 1 except preparing the cathode active material as the ratio Li/Fe was set in mixing the starting materials for synthesis to 1.000/1.000.

### <Sample 5>

A test cell was prepared in the same way as in sample 1 except preparing the cathode active material as the ratio Li/Fe was set in mixing the starting materials for synthesis to 1.025/1.000.

### <Sample 6>

A test cell was prepared in the same way as in sample 1 except preparing the cathode active material as the ratio Li/Fe was set in mixing the starting materials for synthesis to 1.050/1.000.

### <Sample 7>

A test cell was prepared in the same way as in sample 1 except preparing the cathode active material as the ratio Li/Fe was set in mixing the starting materials for synthesis to 1.075/1.000.

### <Sample 8>

A test cell was prepared in the same way as in sample except preparing the cathode active material as the ratio Li/Fe was set in mixing the starting materials for synthesis to 1.100/1.000.

### <Sample 9>

A test cell was prepared in the same way as in sample 1 except preparing the cathode active material as the ratio Li/Fe was set in mixing the starting materials for synthesis to 1.125/1.000.

### <Sample 10>

A test cell was prepared in the same way as in sample 1 except preparing the cathode active material as the ratio Li/Fe was set in mixing the starting materials for synthesis to 1.150/1.000.

### <Sample 11>

A test cell was prepared in the same way as in sample 1 except preparing the cathode active material as the ratio Li/Fe was set in mixing the starting materials for synthesis to 1.175/1.000.

### <Sample 12>

A test cell was prepared in the same way as in sample 1 except preparing the cathode active material as the ratio Li/Fe was set in mixing the starting materials for synthesis to 1.200/1.000.

### <Sample 13>

A test cell was prepared in the same way as in sample 1 except preparing the cathode active material as the ratio Li/Fe was set in mixing the starting materials for synthesis to 1.225/1.00.

X-ray diffractometry was carried on the cathode active material samples of samples 1 to 13, prepared as described above, in accordance with the Rietveld method. In X-ray diffractometry, an X-ray diffraction pattern was measured of a cathode active material, using an X-ray diffraction unit RINT2000, manufactured by RIGAKUSHA, through a range of a diffraction angle of 10.0° ≤ 2θ ≤ 90.0°, at a scanning speed of 0.02°/sec. In measurement, a tube bulb with a copper target (CuKα rays) and a monochrometer were used.

A peak integration strength of the main peak of LiFePO₄ appearing in the vicinity of the diffraction angle of 22.6° and a peak integration strength of the main peak of Li₃PO₄ appearing in the vicinity of the diffraction angle of 23.1° were found to find the ratio of the main peak integration strength of Li₃PO₄ to the main peak integration strength of LiFePO₄, referred to below simply as peak integration strength ratio.

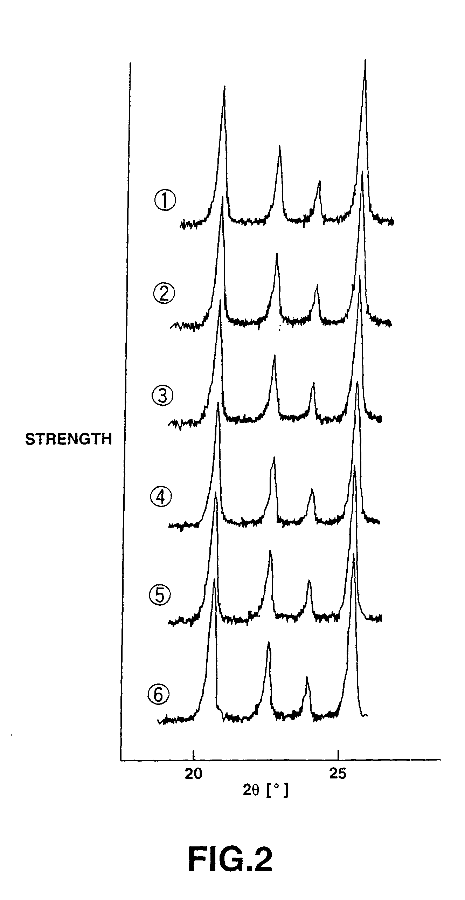

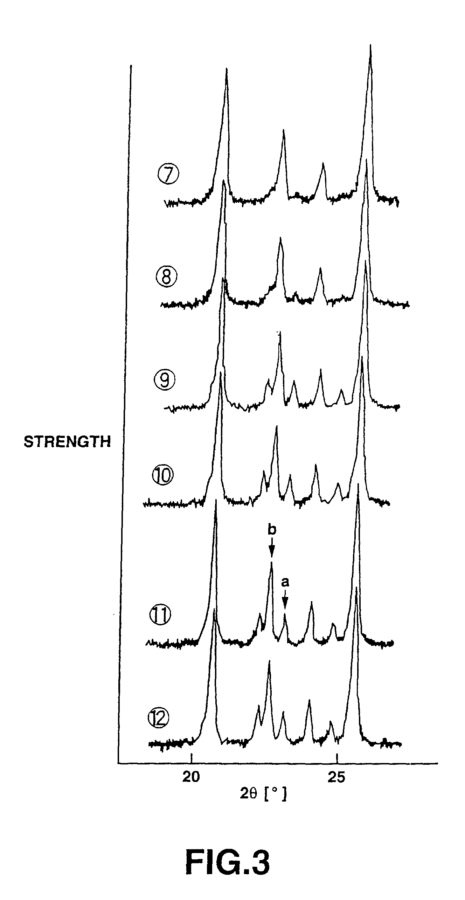

Figs.2 and 3 show an X-ray diffraction pattern of samples 1 to 6 in a diffraction angle range of 20° ≤ 2θ ≤ 25° and an X-ray diffraction pattern of samples 7 to 12 in a diffraction angle range of 20° ≤ 2θ ≤ 25°, respectively. In the X-ray diffraction patterns, shown in Figs.2 and 3, the numerals affixed to the respective X-ray diffraction patterns coincide with the sample numbers. In Fig.3, a and b indicate the main peak of Li₃PO₄ appearing in the vicinity of the diffraction angle of 23.1° and the main peak of LiFePO₄ appearing in the vicinity of the diffraction angle of 22:6°, respectively.

As may be seen from Figs.2 and 3, the more significantly the ratio Li/Fe exceeds 1, that is the more significantly the composition of Li₃PO₄ exceeds a theoretical value, the more significantly is the main peak of LiFePO₄ increased. Thus, it may be confirmed that, the more significantly the composition of Li₃PO₄ exceeds a theoretical value, the more significantly the amount of Li₃PO₄ left in the cathode active material is increased.

The peak integration strength ratio, as measured as described above, is shown in Table 1. Meanwhile, in a range of the composition of the starting materials for synthesis of 1/1.05 ≤ Li/Fe ≤ 1/1, the totality of the amount charged of Li₃PO₄ is used in the synthesis reaction, so that no peak of Li₃PO₄ is measured. On the other hand, Li₃PO₄ added in an amount exceeding the theoretical amount used for the synthesis reaction is presumably left in the cathode active material along with Li₃PO₄ as produced. So, the molar ratio of the theoretical amount of Li₃PO₄ left over in the cathode active material to the theoretical amount of LiFePO₄ generated in the synthesis reaction, or Li₃PO₄/LiFePO₄ (theoretical value), is shown in Table 1:

**Table 1**

| | mixing ratio of starting materials for synthesis (Li/Fe) | peak integration strength ratio | Li₃PO₄/LiFePO₄ (theoretical value) |
|---|---|---|---|
| sample 1 | 1.000/1.075 | 0 | 0 |
| sample 2 | 1.000/1.050 | 0 | 0 |
| sample 3 | 1.000/1.025 | 0 | 0 |
| sample 4 | 1.000/1.000 | 0 | 0 |
| sample 5 | 1.025/1.000 | 8.26 × 10⁻³ | 8.33 × 10⁻³ |
| sample 6 | 1.050/1.000 | 1.57 × 10⁻² | 1.66 × 10⁻² |
| sample 7 | 1.075/1.000 | 2.43 × 10⁻² | 2.50 × 10⁻² |
| sample 8 | 1.100/1.000 | 3.26 × 10⁻² | 3.33 × 10⁻² |
| sample 9 | 1.125/1.000 | 4.13 × 10⁻² | 4.17 × 10⁻² |
| sample 10 | 1.150/1.000 | 4.96 × 10⁻² | 5.00 × 10⁻² |
| sample 11 | 1.175/1.000 | 5.79 × 10⁻² | 5.83 × 10⁻² |
| sample 12 | 1.200/1.000 | 6.66 × 10⁻² | 6.67 × 10⁻² |
| sample 13 | 1.225/1.000 | 7.47 × 10⁻² | 7.50 × 10⁻² |

It is seen from Table 1 that the peak integration strength ratio, obtained on actual measurement, approximately coincides with Li₃PO₄/LiFePO₄ (theoretical value). That is, the peak integration strength ratio may be said to be proportionate to Li₃PO₄/LiFePO₄ in the actual cathode active material.

It should be noted that the peak integration strength ratio, obtained on actual measurement, is represented as values smaller than Li₃PO₄/LiFePO₄ (theoretical value). This is presumably ascribable to the fact that not all of Li₃PO₄ added in an amount exceeding the theoretical value used for synthetic reaction are directly left in the cathode active material but are partially left as other compounds.

The test cells of samples 1 to 13, prepared as described above, were put to the following charging/discharging tests to measure the initial discharge capacity to evaluate cell characteristics.

### <Charging/discharge test>

Each test cell was charged at a constant current and, when the cell voltage reached 4.2 V, the constant current charging was changed over to constant voltage charging, and the charging was continued as the voltage was kept at 4.2 V. The charging was discontinued when the current reaches 0.01mA/cm² or less. The discharge was then carried out and discontinued when the cell voltage was lowered to 2.0V to measure the initial discharge capacity. Both the charging and the discharge were carried out at ambient temperature (25°C) and the current density at this time was set to 0.1mA/cm². The initial discharge capacity density means the initial discharge capacity per unit weight of LiFePO₄.

The cell samples with the initial capacity less than 140 mAh/g, not less than 140 mAh/g and not less than 150 mAh/g were evaluated as practically unusable, practically usable and optimum, respectively. The measured results and the evaluation are shown in Table 2, wherein ×, ○ and ⓞ denote being practically unusable, practically usable and optimum, respectively.

**Table 2**

| | mixing ratio of starting materials for synthesis (Li/Fe) | initial discharge capacity (mAh/g) | cell evaluation |
|---|---|---|---|
| sample 1 | 1.000/1.075 | 118.8 | × |
| sample 2 | 1.000/1.050 | 141.8 | ○ |
| sample 3 | 1.000/1.025 | 150.2 | ⓞ |
| sample 4 | 1.000/1.000 | 157.8 | ⓞ |
| sample 5 | 1.025/1.000 | 159.0 | ⓞ |
| sample 6 | 1.050/1.000 | 160.7 | ⓞ |
| sample 7 | 1.075/1.000 | 162.5 | ⓞ |
| sample 8 | 1.100/1.000 | 160.1 | ⓞ |
| sample 9 | 1.125/1.000 | 143.6 | ○ |
| sample 10 | 1.150/1.000 | 141.6 | ○ |
| sample 11 | 1.175/1.000 | 146.0 | ○ |
| sample 12 | 1.200/1.000 | 141.1 | ○ |
| sample 13 | 1.225/1.000 | 136.9 | × |

It is seen from Table 2 that the samples 2 to 11 of the non-aqueous electrolyte cell in which, in the mixing of the starting materials for synthesis, the anode active materials were prepared to a range of 1/1.05 ≤ Li/Fe ≤ 1.2/1 are of the initial discharge capacity of not less than 140 mAh/g and thus are practically usable. In particular, the samples 3 to 8 of the non-aqueous electrolyte cell in which, in the mixing of the starting materials for synthesis, the cathode active materials were prepared to a range of 1/1.025 ≤Li/Fe≤1.1/1, are of the initial discharge capacity of not less than 150mAh/g and thus are practically usable.

Conversely, the sample 1 ofthe non-aqueous electrolyte cell, in which the anode active material was prepared to a range of 1/1.05>Li/Fe in mixing the starting materials for synthesis, is of a low initial capacity and thus is not practically usable. On the other hand, the sample 13 of the non-aqueous electrolyte cell, in which the anode active material was prepared to a range of 1.2/1 > Li/Fe in mixing the starting materials for synthesis, is also of a low initial capacity and thus is not practically usable.

Thus, by adjusting the cathode active material, in mixing the starting materials for synthesis, so as to be in a range of 1/1.05≤Li/Fe≤1.2/1, the amount of the starting materials for synthesis left in the cathode active material can be in an optimum range to render it possible to obtain a non-aqueous electrolyte cell having superior cell characteristics.

Comparison of the Tables 1 and 2 reveals that the samples 5 to 13 of the non-aqueous electrolyte cell in which Li₃PO₄/LiFePO₄ in the synthesized cathode active material is not larger than 6.67 × 10⁻², with the composition of the starting materials for synthesis being such that Li/Fe≤ 1.2/1, are high in initial capacity and superior in cell characteristics. Conversely, the sample 13 ofthe non-aqueous electrolyte cell in which the composition of the starting materials for synthesis is 1.21<Li/Fe and in which Li₃PO₄/LiFePO₄ exceeds 6.67 × 10⁻², is of low discharge capacity and is not practically useful.

Thus, it may be seen that, by employing a cathode active material having Li₃PO₄/LiFePO₄ not larger than 6.67 × 10⁻², such a non-aqueous electrolyte cell having superior cell characteristics may be produced.

Next, a polymer cell was prepared to evaluate its characteristics.

### <Sample 14>

A gelated electrode was first prepared as follows: First, polyvinylidene fluoride, copolymerized with 6.9wt% of hexafluoropropylene, a non-aqueous electrolyte and dimethyl carbonate, were mixed, agitated and dissolved to a sol-like electrolytic solution. To the sol-like electrolytic solution was added 0.5 wt% of vinylene carbonate VC to form a gelated electrolytic solution. As the non-aqueous electrolyte solution, such a solution obtained on mixing ethylene carbonate EC and propylene carbonate PC at a volumetric ratio of 6:4 and on dissolving LiPF₆ at a rate of 0.85 mol/kg in the resulting mixture was used.

A cathode was then prepared as follows: First; 95 parts by weight of the cathode active material prepared as sample 4, and 5 parts by weight of poly (vinylidene fluoride), in the form of fluorine resin powders, as a binder, were mixed together, and added to with N-methyl pyrrolidone to give a slurry, which slurry was then coated on an aluminum foil 20 µm in thickness, then dried under heating and pressed to form a cathode coating film. A gelated electrolytic solution then was applied to one surface of the cathode coating film and dried to remove the solvent. The resulting product was punched to a circle 15 mm in diameter, depending on the cell diameter, to form a cathode electrode.

The anode then was prepared as follows: First, 10 wt% of fluorine resin powders, as a binder, were mixed into graphite powders, and added to with N-methyl pyrrolidone to form a slurry, which then was coated on a copper foil, dried under heating and pressed. The resulting product was punched to a circle 16.5 mm in diameter, depending on the cell diameter, to form an anode electrode.

The cathode, thus prepared, was charged into the cathode can, while the anode was held in the anode can and the separator was arranged between the cathode and the anode. The anode can and the cathode can were caulked and secured together to complete a type 2016 coin-shaped lithium polymer cell having a diameter of 20 mm and a thickness of 1.6 mm.

The polymer cell of sample 14, prepared as described above, was put to the aforementioned test on charging/discharging cyclic characteristics to find the initial discharging capacity and capacity upkeep ratio after 30 cycles.

### <Test of charging/discharging cyclic characteristics>

The charging/discharging cyclic characteristics were evaluated based on the capacity upkeep ratio after repeated charging/discharging.

Each coin-shaped lithium polymer cell was charged at a constant current and, at a time point the cell voltage reached 4.2 V, the constant current charging was switched to constant voltage charging and charging was carried out as the cell voltage was kept at 4.2 V. The charging was terminated at a time point the current value fell to 0.01 mA/cm² or less. Each test was then discharged. The discharging was terminated at a time point the cell voltage fell to 2.0 V.

With the above process as one cycle, 30 cycles were carried out, and the discharge capacity at the first cycle and that at the thirtieth cycle were found. The ratio of the discharge capacity at the 30th cycle (C2) to the discharge capacity at the first cycle (C1), or (C2/C1) × 100, was found as the discharge capacity upkeep ratio. Meanwhile, both the charging and the discharging were carried out at ambient temperature (25°C), as the current density at this time was set to 0.1 mA/cm². The results are shown in Table 3.

**Table 3**

| | mixing ratio of starting materials for synthesis (Fe/Li) | initial discharging capacity (mAh/g) | discharge capacity upkeep ratio (%) |
|---|---|---|---|
| sample 14 | 1.000/1.000 | 158 | 95.7 |

As may be seen from Table 3, both the initial discharging capacity and capacity upkeep ratio after 30 cycles are of satisfactory values. From this, it may be seen that the cathode active material prepared in accordance with the manufacturing method of the present invention gives meritorious effects, such as improved discharge capacity and improved cyclic characteristics, even in case the gelated electrolyte is used in place of the non-aqueous electrolyte as the non-aqueous electrolytic solution.

## Claims

1. A cathode active material mainly composed of a compound represented by a general formula LiₓFePO₄, where 0 < x ≤ 1, wherein
a molar ratio of Li₃PO₄ to the compound represented by the general formula LiₓFePO_{4.} which ratio represented by Li₃PO₄/LiFePO_{4.} is Li₃PO₄/LiFePO₄ ≤ 6.67 × 10⁻².

2. The cathode active material according to claim 1 wherein starting materials for synthesis for the compound represented by the general formula LiₓFePO_{4.} where 0< x≤1, are Li₃PO₄ and Fe₃(PO₄)₂ or hydrates of Fe₃(PO₄)₂ represented by Fe₃(PO₄)₂·nH₂O, where n denotes a number of hydrates.

3. A non-aqueous electrolyte cell having a cathode containing a cathode active material, an anode containing an anode active material and a non-aqueous electrolyte, wherein said cathode active material is mainly composed of a compound represented by a general formula LiₓFePO₄, where 0<x≤1 and wherein a molar ratio of Li₃PO₄ to the compound represented by the general formula LiₓFePO₄, which ratio is represented by Li₃PO₄/LiFePO₄, is Li₃PO₄/LiFePO₄ ≤ 6.67 × 10⁻².

4. The non-aqueous electrolyte cell according to claim 3 wherein starting materials for synthesis for the compound represented by the general formula LiₓFePO₄, where 0< x≤1 are Li₃PO₄ and Fe₃(PO₄)₂ or hydrates of the Fe₃(PO₄)₂ represented by Fe₃(PO₄)₂·nH₂O, where n denote a number of hydrates.

5. The non-aqueous electrolyte cell according to claim 3 wherein said non-aqueous electrolyte is a non-aqueous electrolyte solution composed of an electrolyte dissolved in a non-aqueous protonic solution.

6. The non-aqueous electrolyte cell according to claim 3 wherein said non-aqueous electrolyte is a solid electrolyte.

7. A method for preparing a cathode active material comprising:
a mixing step of mixing Li₃PO₄ and Fe₃(PO₄)₂ or hydrates of the Fe₃(PO₄)₂ represented by Fe₃(PO₄)₂·nH₂O, where n denotes a number of hydrates, as starting materials for synthesis, so as to form a mixture; and
sintering step of sintering the mixture obtained in said mixing step;
wherein a mixing ratio of said starting materials for synthesis in terms of an element molar ratio of Li to Fe represented by Li/Fe is 1/1.05 ≤ Li/Fe ≤ 1.2/1.

8. A method for the preparing a non-aqueous electrolyte cell having a cathode containing a cathode active material, an anode containing an anode active material and a non-aqueous electrolyte, comprising:
mixing step of, when preparing said cathode active material, mixing Li₃PO₄ and Fe₃(PO₄)₂ or hydrates of Fe₃(PO₄)₂ represented by Fe₃(PO₄)₂·nH₂O, where n denotes a number of hydrates, as starting materials for synthesis so as to form a mixture; and
sintering step of sintering the mixture obtained in said mixing step;
wherein a mixing ratio of said starting materials for synthesis in terms of an element molar ratio of Li to Fe represented by Li/Fe is 1/1.05 ≤ Li/Fe ≤ 1.2/1.

9. The method for preparing the non-aqueous electrolyte cell according to claim 8 wherein said non-aqueous electrolyte is a non-aqueous electrolyte solution composed of an electrolyte dissolved in a non-aqueous protonic solution.

10. The method for preparing the non-aqueous electrolyte cell according to claim 8 wherein said non-aqueous electrolyte is a solid electrolyte.
